# EUROPÄISCHE PATENTSCHRIFT

(11) **EP 1 571 239 B1**
(45) Veröffentlichungstag und Bekanntmachung des Hinweises auf die Patenterteilung: **21.10.2009**
(21) Anmeldenummer: 05004164.9
(22) Anmeldetag: 25.02.2005
(51) Int. Cl.: C23C 22/74, C09D 5/08, C04B 28/34

(54) **Phosphathaltige Zusammensetzung und Verfahren zur Erzeugung von Schutzschichten auf Metalloberflächen**
Phosphate-containing composition and method for producing of protective layers on metallic surfaces
Composition contenant de phosphate et procédé de production des couches protectrices sur des surfaces métalliques

(30) Priorität: 01.03.2004 DE 102004010439
(43) Veröffentlichungstag der Anmeldung: 07.09.2005
(73) Patentinhaber: Marx, Joachim, 45476 Mülheim an der Ruhr (DE)
(72) Erfinder: Marx, Joachim, 45476 Mülheim an der Ruhr (DE)
(74) Vertreter: Gesthuysen, von Rohr & Eggert

(56) Entgegenhaltungen:
- EP-A- 0 625 582
- EP-A- 0 926 249
- EP-A- 0 952 193
- CH-A- 560 596
- DE-A1- 10 124 434
- US-A- 4 003 867
- US-A- 4 288 492
- US-A- 4 554 213

## Beschreibung

Die vorliegende Erfindung betrifft eine Zusammensetzung bzw. ein Mittel zur Erzeugung von Schutzschichten auf Metalloberflächen, insbesondere auf Gegenständen aus Eisen oder Eisenlegierungen, wie insbesondere Stahl, sowie die Verwendung der Zusammensetzung bzw. des Mittels für den vorgenannten Zweck.

Des weiteren betrifft die vorliegende Erfindung ein Verfahren zur Erzeugung von Schutzschichten auf Metalloberflächen, insbesondere auf Gegenständen aus Eisen oder Eisenlegierungen, wie insbesondere Stahl, unter Verwendung der erfmdungsgemäßen Zusammensetzung bzw. des erfindungsgemäßen Mittels.

Mittel zur Herstellung von Schutzschichten auf Gegenständen aus Eisen oder Eisenlegierungen in Form einer wäßrigen, Phosphate enthaltenden Lösung oder Dispersion sind bekannt.

Solche Mittel bzw. Verfahren zur Herstellung der Schutzschichten sind z. B. in der US-Patentschrift 3 278 328 und in den deutschen Patentschriften 19 62 100 und 21 60 784 umfassend beschrieben.

Durch die Fortentwicklung der Technik, besonders durch den Einsatz von zwar gewalztem, aber nicht schlußgeglühtem Stahlband, sogenanntem "Semifinished Material", als Elektroblech, reichen die bekannten Überzüge nicht in allen Fällen. Überzüge aus Phosphaten erweichen oberhalb von 800 °C, während für die neue zukunftsorientierte Technik Beständigkeiten bis mindestens 1.000 °C gefordert werden. Gleichzeitig wird aber auch eine Beständigkeit des Überzuges im Temperaturbereich von 0 bis 50 °C, und zwar verbunden mit einer Lagerfähigkeit und der Korrosionsschutzwirkung eines zugleich aber thermisch hochbelastbaren Überzuges auf Stahl verlangt.

In der auf den Anmelder selbst zurückgehenden Patentanmeldung DE 34 03 660 wird zur Lösung dieses hinsichtlich der Anforderungen stark divergierenden Problems ein Mittel zur Herstellung von Schutzschichten aus Gegenständen aus Eisen- oder Eisenlegierungen in Form einer wäßrigen Lösung oder Dispersion vorgeschlagen, welche 5 bis 50, insbesondere 20 bis 40 Gew.-%, eines Aluminiumhydrogenphosphats und 5 bis 25 Gew.-% eines organischen Polymeren enthält, das in der Hitze einen Film bildet. Die dort genannten Aluminiumhydrogenphosphate mit ihren relativ geringen P₂O₅ / Al₂O₃-Molverhältnissen von 3,5 bis 3,9 haben aber den entscheidenden Nachteil, daß sie bei Raumtemperatur als Feststoff vorliegen und sich folglich nicht immer mit ausreichender Homogenität in die Lösung oder Dispersion einarbeiten lassen. Folglich müssen die sie enthaltenden Dispersionen mit einer noch immer relativ hohen Schichtdicke aufgetragen werden, um Schutzschichten mit ausreichender Schutzwirkung auf den betreffenden Metalloberflächen aus Eisen oder Eisenlegierungen zu erzeugen. Des weiteren neigen die Lösungen oder Dispersionen bei Lagerung oder Transport zum Verklumpen durch Alterung.

Die EP 0 625 582 A2 betrifft eine Zusammensetzung zur Behandlung eines nichtorientierten Elektrostahlbleches, welche 100 Gewichtsteile, bezogen auf den Feststoff, einer aus der Gruppe von Aluminiumphosphat, Calciumphosphat und Zinkphosphat als anorganische Komponente ausgewählte Substanz und 1 bis 300 Gewichtsteile einer grobkörnigen Harzemulsion mit einer Korngröße von 0,3 bis 3,0 µm als organische Komponente enthält. Sofern als anorganische Komponente Aluminiumphosphat verwendet wird, beträgt das Al₂O₃/H₃PO₄-Molverhältnis 0,15 bis 0,20. In bezug auf die Harzkomponente sind Acryl-, Polystyrol-, Vinylacetat-, Silicon-, Polyethylen-, Polypropylen-, Polyamid-, Polycarbonat-, Melamin-, Phenol-, Polyurethan-, Alkyl-, Isocyanat- und Expoxyharze vorgesehen.

Die EP 0 952 193 A1 betrifft eine chromfreie Zusammensetzung zur Behandlung von metallischen Oberflächen, wobei die Zusammensetzung zum einen (i) eine Mischung aus einem Aluminiumsalz und einem teilchenförmigen anorganischen Oxid und/oder ein Aluminium, Sauerstoff und mindestens ein hiervon verschiedenes Element enthaltendes, teilchenförmiges anorganisches Oxid sowie zum anderen (ii) ein Salz eines von Aluminium verschiedenen Metalls, (iii) eine phosphorhaltige Verbindung sowie (iv) ein Harz bzw. einen Harzvorläufer umfaßt, wobei - sofern die erstgenannte Komponente (i) eine Mischung eines Aluminiumsalzes und eines teilchenförmigen anorganischen Oxids ist- das Phosphor/Aluminium-Äquivalentverhältnis nicht weniger als 0,1 betragen soll.

Eine Aufgabe der vorliegenden Erfindung besteht daher in der Bereitstellung einer Zusammensetzung bzw. eines Mittels, welche bzw. welches sich zur Erzeugung von Schutzschichten auf Metalloberflächen, insbesondere auf Gegenständen aus Eisen oder Eisenlegierungen, wie insbesondere Stahl, eignet und die zuvor genannten Nachteile des Standes der Technik zumindest teilweise vermeidet.

Insbesondere besteht eine weitere Aufgabe der vorliegenden Erfindung darin, das in der auf den Anmelder selbst zurückgehenden DE 34 03 660 A1 beschriebene Mittel weiterzuentwickeln.

Der Anmelder hat nun überraschenderweise herausgefunden, daß das zuvor geschilderte Problem gelöst werden kann, wenn in einer zur Erzeugung von Schutzschichten auf Metalloberflächen, insbesondere Gegenständen aus Eisen oder Eisenlegierungen, dienenden, wäßrigen phosphathaltigen Lösung oder Dispersion, die eine Phosphatkomponente auf Basis von Aluminiumhydrogenphosphat und ein unter Erwärmung bzw. Hitze einen Film ausbildendes organisches Polymer enthält, als Phosphatkomponente ein Aluminiumhydrogenphosphat mit einem P₂O₅ / Al₂O₃-Molverhältnis von mehr als 4, insbesondere mehr als 4,2, vorzugsweise mehr als 4,5, eingesetzt bzw. verwendet wird und der Zusammensetzung zudem Lithium hydroxid zugesetzt wird.

Gegenstand der vorliegenden Erfindung ist somit eine Zusammensetzung, insbesondere zur Erzeugung von Schutzschichten auf Metalloberflächen, wie Gegenständen aus Eisen oder Eisenlegierungen (z. B. Stahl), in Form einer wäßrigen phosphathaltigen Lösung oder Dispersion, vorzugsweise Lösung, welche
(a) mindestens ein Aluminiumhydrogenphosphat mit einem P₂O₅ / Al₂O₃-Molverhältnis > 4, vorzugsweise > 4,2, insbesondere > 4,5
(b) mindestens ein unter Erwärmung filmbildendes organisches Polymer und
(c) Lithiumhydroxid
enthält.

Denn - wie der Anmelder überraschend gefunden hat - lassen sich Aluminiumhydrogenphosphate mit einem P₂O₅ / Al₂O₃-Molverhältnis von mehr als 4, insbesondere mehr als 4,2, vorzugsweise mehr als 4,5, besonders gut bzw. homogen in wäßrige Lösungen und Dispersionen einarbeiten, weil sie bei Raumtemperatur flüssig sind, was unter anderem zu einer besseren Mischbarkeit mit Wasser führt. Folglich entfalten die erfindungsgemäßen Zusammensetzungen, welche derartige Aluminiumhydrogenphosphate enthalten, bei Auftrag als Schutzschichten auf Metalloberflächen, wie Gegenständen aus Eisen oder Eisenlegierungen, insbesondere Stahl, eine verbesserte Schutzwirkung. Infolge des bei Raum- bzw. Umgebungstemperatur flüssigen Aggregatzustandes derartiger Aluminiumhydrogenphosphate lassen sich diese außerdem besser bzw. homogener auf der zu schützenden Metalloberfläche verteilen und entfalten somit dort eine gesteigerte Phosphatierwirkung. Die Lösungen oder Dispersionen nach der vorliegenden Erfindung sind extrem lager- und transportstabil und zeigen auch bei längerer Lagerung oder bei Transport keinerlei Alterungserscheinungen, insbesondere kein Verklumpen.

Aufgrund der verbesserten Einarbeitbarkeit derartiger Aluminiumhydrogenphosphate in wäßrige Lösungen oder Dispersionen und der folglich verbesserten Homogenität der resultierenden Zusammensetzungen können diese Zusammensetzungen mit - im Vergleich zu den Mitteln des Standes der Technik - verminderter Schichtdicke auf die zu schützende Metalloberfläche aufgetragen werden, und dies bei zumindest gleicher oder aber sogar verbesserter Schutzwirkung. Dies hat nicht unerhebliche Einsparungen zur Folge. Aufgrund der verbesserten Einarbeitbarkeit kann die Menge an Aluminiumhydrogenphosphat(en) in derartigen Zusammensetzungen deutlich reduziert werden.

Die erfindungsgemäße Zusammensetzung hat zudem den entscheidenden Vorteil, daß sie chrom- bzw. chromatfrei ist und zumindest im wesentlichen biologisch abbaubar ist. Somit ist sie sehr umweltverträglich und erfüllt alle derzeit bestehenden diesbezüglichen Vorschriften, Richtlinien und dergleichen. Die erfindungsgemäße Zusammensetzung ruft des weiteren keinerlei Reizung von Haut und Augen bei der Verarbeitung hervor. Falls sich einer Behandlung mit der erfindungsgemäßen Zusammensetzung eine thermische Behandlung (z. B. eine Glühbehandlung, beispielsweise ein Verschweißen von gestanzten Blechpaketen oder Druckguß mit Aluminium oder Kupfer) der zuvor mit der erfindungsgemäßen Zusammensetzung behandelten Oberfläche anschließt, bilden sich bei dieser Behandlung keine gefährlichen Gase, welche Sondermaßnahmen für die Arbeitsplätze erfordern würden, und keine Kohlenstoffabscheidungen. Auch in dieser Hinsicht ist die erfindungsgemäße Zusammensetzung in hohem Maße ökologisch verträglich bzw. kompatibel.

Die Mengen, mit denen das Aluminiumhydrogenphosphat eingesetzt wird, können in weiten Grenzen variieren. Im allgemeinen enthält die Zusammensetzung 5 bis 60 Gew.-%, insbesondere 10 bis 50 Gew.-%, Aluminiumhydrogenphosphat(e), bezogen auf die Zusammensetzung. Die Untergrenze ergibt sich aus der Tatsache, daß überhaupt eine gewisse Schutzwirkung erzielt werden muß, während die Obergrenze unter anderem dadurch bedingt ist, daß das Aluminiumhydrogenphosphat noch in die Zusammensetzung einarbeitbar sein muß und zum anderen bei Überschreitung einer gewissen Maximalkonzentration keine nennenswerte Steigerung in bezug auf die Schutzwirkung mehr beobachtet wird. Dennoch kann es gegebenenfalls erforderlich sein, von den vorgenannten Mengen abzuweichen.

Die Menge an unter Erwärmung filmbildenden organischen Polymeren kann gleichermaßen in weiten Grenzen variieren. Im allgemeinen enthält die erfindungsgemäße Zusammensetzung Polymer(e) in Mengen von 5 bis 40 Gew.-%, insbesondere 5 bis 30 Gew.-%, vorzugsweise 5 bis 25 Gew.-%, bezogen auf die Zusammensetzung. Dennoch kann es gegebenenfalls erforderlich oder anwendungsbedingt gewünscht sein, von den vorgenannten Mengen abzuweichen.

Was das erfindungsgemäß eingesetzte Aluminiumhydrogenphosphat anbelangt, so kann dieses entweder in Form der kristallwasserfreien Salze oder aber in Form der Hydrate eingesetzt werden. Erfindungsgemäß geeignete Aluminiumhydrogenphosphate, insbesondere in Form einarbeitbarer wäßriger Lösungen, sind beispielsweise von der Chemischen Fabrik Budenheim KG, Budenheim, Deutschland, erhältlich; hierbei handelt es sich um eine sozusagen statistische Mischung verschiedener Aluminiumhydrogenphosphate, welche beispielsweise neben der Spezies etwa der Formel AlH₃(PO₄)₂ • 3 H₂O auch noch verschiedene Monoaluminiumphosphatmodifikationen enthält. Entscheidend ist, daß das eingesetzte Aluminiumhydrogenphosphat im Mittel ein P₂O₅ / Al₂O₃-Molverhältnis > 4 aufweist, um die erfindungsgemäß geforderten Anwendungseigenschaften erfüllen zu können.

Was das erfindungsgemäß eingesetzten organischen Polymere anbelangt, so müssen diese unter Erwärmen, insbesondere bei Temperaturen ab bzw. oberhalb von 250 °C, filmbildend sein. z. B. mit Melamin/Formol-Harzen (MF-Harzen, z. B. Luwipal®) ist eine Härtung beispielsweise schon bei Temperaturen ab bzw. oberhalb von 80 °C möglich.

Die in der Hitze, d. h. bei Temperaturen über 250 °C einen Film bildenden organischen Polymeren bestehen vorzugsweise aus Acryl- oder Epoxidharz oder einem synthetischen Wachs. Wärmehärtbare Acrylharze oder Epoxidharze sind bekannt. Bei den eingesetzten Wachsdispersionen handelt es sich insbesondere um solche auf Basis von Polyethylen, Polypropylen oder fluorierten Polyethylenen oder aber Polyethylenglykolen (PEG). Dispersionen der letztgenannten Art sind beim sogenannten Coil-Coating bekannt (Ullmann Bd. 15, S. 693 ff (1978)). Auch die Acrylharze sind in Form von Dispersionen bekannt, in denen die Harzkomponente meist aus Homopolymerisaten von Acryl- bzw. Methacrylsäureestern oder deren Copolymerisaten mit artgleichen Monomeren, insbesondere Butadien, Styrol oder Maleinsäure, bestehen. Auch wärmehärtbare Epoxidharze sind als Dispersionen oder Emulsionen im Handel. Besonders brauchbar sind jene auf Basis der zu den Duroplasten gehörenden Polyadditionsprodukte aus Epoxiden mit Novolaken.

Weiterhin enthält die erfindungsgemäße Zusammensetzung - neben (a) dem zuvor definierten Aluminiumhydrogenphosphat und (b) dem zuvor definierten, unter Erwärmung filmbildende organischen Polymer - als dritte bzw. weitere Komponente (c) Lithiumhydroxid.

Um eine gute Lagerstabilität der erfindungsgemäßen Zusammensetzung zu gewährleisten, insbesondere ein Ausfällen der Inhaltsstoffe zu vermeiden, wird die Zusammensetzung vorteilhafterweise sauer eingestellt. Vorzugsweise wird die erfindungsgemäße Zusammensetzung auf einen pH-Wert < 3, insbesondere ≤ 2,5, eingestellt.

Um die Eigenschaften, insbesondere die Anwendungseigenschaften, die Lagerfähigkeit, die Stabilität etc., der erfindungsgemäßen Zusammensetzung zu modifizieren, kann die erfindungsgemäße Zusammensetzung außerdem ein oder mehrere weitere Inhaltsstoffe, Zusatzmittel, Hilfsstoffe, Additive etc. enthalten.

So kann die erfindungsgemäße Zusammensetzung beispielsweise mindestens ein die Eigenschaften der unter Erwärmen bzw. Erhitzen der erfindungsgemäßen Zusammensetzung gebildeten Schutzschichten modifizierendes Reagenz enthalten.

So ist es empfehlenswert, daß die erfindungsgemäße Zusammensetzung mindestens ein Metallhydroxid, -oxid und/oder -oxidhydrat enthält. Dies ist ausgewählt aus der Gruppe von Erdalkalimetalloxid(en), insbesondere Magnesiumoxid; Zinkoxid(en); Aluminiumoxidhydrat(en); und Alkali- oder Erdalkalimetallhydroxid(en), insbesondere Lithiumhydroxid. Die vorgenannten Verbindungen sind in der Lage, die ausgehend von der erfindungsgemäßen Zusammensetzungen gebildeten Schutzschichten bzw. Schutzfilme positiv zu beeinflussen, insbesondere das Verschleiß-, Korrosions-, Bearbeitungs- und Elastizitätsverhalten der Schutzschichten bzw. Schutzfilme zu verbessern. Beispielsweise können die vorgenannten Verbindungen beim Erhitzen auf Temperaturen oberhalb von 250 °C mit dem Aluminiumhydrogenphosphat bzw. dem daraus unter Wasserabspaltung gebildeten Aluminiummetaphosphat reagieren und auf diese Weise die Korrosionsbeständigkeit der Schutzschichten erhöhen.

So kann die erfindungsgemäße Zusammensetzung beispielsweise Zinkoxid(e) und/oder Magnesiumoxid(e), insbesondere Zinkoxid(e), enthalten, insbesondere in Mengen von 0,1 bis 5 Gew.-%, vorzugsweise 0,5 bis 2 Gew.-%, bezogen auf die Zusammensetzung. Diese werden der erfindungsgemäßen Zusammensetzung vorzugsweise in feinverteilter Form zugesetzt und können in der vorgenannten Weise beim Erwärmen mit dem Aluminiumhydrogenphosphat reagieren und die Eigenschaften der resultierenden Schutzschichten positiv beeinflussen bzw. verbessern. Insbesondere sind Zink- bzw. Magnesiumoxide in der Lage, die Hygroskopizität der ausgehend von der erfindungsgemäßen Zusammensetzung erzeugbaren Schutzschichten bzw. -filme deutlich zu reduzieren, was zu einer signifikanten Verbesserung im Hinblick auf deren Korrosionsbeständigkeit führt.

In gleicher Weise kann die erfindungsgemäße Zusammensetzung auch Aluminiumoxidhydrat(e) enthalten, insbesondere in Mengen von 0,1 bis 10 Gew.-%, vorzugsweise 0,1 bis 5 Gew.-%, bezogen auf die Zusammensetzung. Diese Aluminiumoxidhydrat(e) sind in der Lage, in der vorgenannten Art und Weise mit den Aluminiumhydrogenphosphaten zu reagieren und das Verhalten der Schutzschichten zu verbessern.

Des weiteren ist es vorteilhaft sein, daß die erfindungsgemäße Zusammensetzung Alkali- oder Erdalkalimetallhydroxid(e), vorzugsweise Alkalimetallhydroxid(e), besonders bevorzugt Lithiumhydroxid, enthält, insbesondere in Mengen von 0,1 bis 2 Gew.-%, vorzugsweise 0,5 bis 1 Gew.-%, bezogen auf die Zusammensetzung. Die vorgenannten Verbindungen, insbesondere Lithiumhydroxid, beeinflussen das Elastizitätsverhalten der ausgehend von der erfindungsgemäßen Zusammensetzung gebildeten Schutzschichten bzw. Schutzfilme: Es resultieren weniger spröde Schutzschichten mit einer glatteren, besser zu bearbeitenden Oberfläche, die weniger zur Rißbildung tendiert. Auch die Standzeiten der auf diese Weise erhaltenen Schutzschichten sind deutlich verbessert. Schließlich beeinflußt das Lithiumhydroxid auch positiv das Verhalten beim Glühen.

Um die Schutzwirkung der ausgehend von der erfindungsgemäßen Zusammensetzung erzeugbaren Schutzschichten bzw. Schutzfilme noch weiter zu erhöhen, kann es unter Umständen empfehlenswert sein, wenn die Zusammensetzung mindestens ein Korrosionsschutzmittel enthält, insbesondere in Mengen von 0,1 bis 2 Gew.-%, vorzugsweise 0,1 bis 1 Gew.-%, bezogen auf die erfindungsgemäße Zusammensetzung. Als Korrosionsschutzmittel eignen sich beispielsweise Verbindungen auf Molybdatbasis, so z. B. Alkalidimolybdat (z. B. Natriumdimolybdat).

Des weiteren ist es möglich, daß die erfindungsgemäße Zusammensetzung eine gewisse Menge nichtreaktiver Pigmente oder Additive oder Füllstoffe enthält. So kann die erfindungsgemäße Zusammensetzung beispielsweise ein Silikat und/oder mindestens eine Kieselsäure enthalten, insbesondere in Mengen von 0,1 bis 20 Gew.-%, vorzugsweise 0,1 bis 5 Gew.-%, bezogen auf die Zusammensetzung. Diese Inhaltsstoffe können die resultierenden Schutzschichten positiv beeinflussen, insbesondere deren Abriebfestigkeit erhöhen.

Besonders vorteilhaft ist es, wenn die erfindungsgemäße Zusammensetzung frei von γ-Al₂O₃ ist. Der Anmelder hat überraschender Weise herausgefunden, daß die resultierenden Schichten verbessert sind, wenn kein γ-Al₂O₃ vorhanden ist.

Um eine verbesserte Applizierbarkeit der erfindungsgemäßen Zusammensetzung auf den zu schützenden Metalloberflächen zu gewährleisten, ist es vorteilhaft, wenn die erfindungsgemäße Zusammensetzung mindestens ein Tensid, insbesondere ein nichtionisches Tensid, enthält, insbesondere in Mengen von 0,01 bis 2,5 Gew.-%, vorzugsweise 0,1 bis 2 Gew.-%, bezogen auf die Zusammensetzung.

Um eine gute Applizierbarkeit der erfindungsgemäßen Zusammensetzung zu erreichen, kann es zudem vorteilhaft sein, wenn die Zusammensetzung mindestens einen Verdicker bzw. ein Verdickungsmittel enthält, insbesondere in Mengen von 0,01 bis 2 Gew.-%, vorzugsweise 0,01 bis 0,5 Gew.-%, bezogen auf die Zusammensetzung.

Um ein gutes Einarbeiten der filmbildenden organischen Polymere in die erfindungsgemäße Zusammensetzung zu ermöglichen, kann es vorteilhaft sein, wenn die Zusammensetzung mindestens einen Lösungsvermittler und/oder ein Dispergiermittel enthält, beispielsweise auf Basis eines Glykols (z. B. 1,4-Butandiol). Solche Lösungsvermittler oder Dispergiermittel werden insbesondere in Mengen von 0,1 bis 10 Gew.-%, vorzugsweise 1 bis 6 Gew.-%, bezogen auf die Zusammensetzung, eingesetzt.

Gemäß einer erfindungsgemäß besonders bevorzugten Ausführungsform weist die erfindungsgemäße Zusammensetzung die folgende Zusammensetzung auf, wobei alle nachstehend genannten Mengenangaben auf die Zusammensetzung bezogen sind:
- 5 bis 60 Gew.-%, insbesondere 10 bis 50 Gew.-%, mindestens eines Aluminiumhydrogenphosphats mit einem P₂O₅ / Al₂O₃-Molverhältnis > 4,
- 5 bis 40 Gew.-%, insbesondere 5 bis 30 Gew.-%, vorzugsweise 5 bis 25 Gew.-%, mindestens eines unter Erwärmung filmbildenden organischen Polymers,
- gegebenenfalls 0,1 bis 5 Gew.-%, insbesondere 0,5 bis 2 Gew.-%, Zinkoxid(e) und/oder Magnesiumoxid(e),
- gegebenenfalls 0,1 bis 10 Gew.-%, insbesondere 0,1 bis 5 Gew.-%, Aluminiumoxidhydrat(e),
- 0,1 bis 2 Gew.-%, insbesondere 0,5 bis 1 Gew.-%, Lithiumhydroxid,
- gegebenenfalls 0,1 bis 20 Gew.-%, insbesondere 0,1 bis 5 Gew.-%, mindestens eines Silikats und/oder mindestens einer Kieselsäure,
- gegebenenfalls 0,1 bis 2 Gew.-%, insbesondere 0,1 bis 1 Gew.-%, mindestens eines Korrosionsschutzmittels, insbesondere auf Molybdatbasis,
- gegebenenfalls 0,01 bis 2,5 Gew.-%, insbesondere 0,1 bis 2 Gew.-%, mindestens eines Tensids, insbesondere eines nichtionischen Tensids,
- gegebenenfalls mindestens 0,1 bis 10 Gew.-%, insbesondere 1 bis 6 Gew.-%, mindestens eines Lösungsvermittlers und/oder Dispergiermittels,
- gegebenenfalls 0,01 bis 2 Gew.-%, insbesondere 0,01 bis 0,5 Gew.-%, mindestens eines Verdickungsmittels

Ein weiterer Gegenstand der vorliegenden Erfindung ist die Verwendung der erfindungsgemäßen Zusammensetzung zur Erzeugung von Schutzschichten auf Metalloberflächen, insbesondere Gegenständen aus Eisen oder Eisenlegierungen, wie Stahl.

Einen wiederum weiteren Gegenstand der vorliegenden Erfindung ist somit auch ein Verfahren zur Erzeugung von Schutzschichten auf Metalloberflächen, insbesondere auf Gegenständen aus Eisen oder Eisenlegierungen, wie Stahl, bei dem man die Zusammensetzung nach der vorliegenden Erfindung auf die Metalloberfläche aufträgt und anschließend erhitzt, wie nachfolgend noch näher beschrieben. Auf diese Weise lassen sich auf den Metalloberflächen korrosionsbeständige Schutzschichten erzeugen, welche über eine hohe Abriebfestigkeit, d. h. eine gute mechanische Beständigkeit, verfügen, andererseits aber ohne weiteres bearbeitbar sind, insbesondere über eine gute Stanz- und Biegefähigkeit ohne Staubbildung und ohne Verschleiß der Bearbeitungswerkzeuge verfügen.

Weiterer Gegenstand der vorliegenden Erfindung ist die Verwendung der Zusammensetzung nach der vorliegenden Erfindung zur Erzeugung von Isolierschichten auf Kokillen für den Stahl- oder Formguß. Auch in bezug auf Druckguß zeigt die erfindungsgemäße Zusammensetzung gute Anwendungseigenschaften.

Zur Ausbildung der Schutzschichten wird die erfindungsgemäße Zusammensetzung auf die Metalloberflächen, insbesondere auf Gegenstände aus Eisen oder Eisenlegierungen, z. B. auf Stahlbleche, Stahlbänder oder Hohlkörper aus Stahl, wie z. B. Kokillen für den Formguß, aufgetragen. Das geschieht in der für technische Lacksysteme üblichen Weise durch Spritzen, Tauchen, Walzenauftrag oder z. B. nach dem sogenannten Coil-Coating-Verfahren, in Schichtdicken von 0,5 bis 20 µm, insbesondere 0,75 bis 10 µm, vorzugsweise 1,0 bis 10 µm. Durch Erhitzen auf Temperaturen oberhalb von 250 °C, insbesondere auf 250 bis 300 °C, in 1 bis 120 Sekunden, vorzugsweise in 5 bis 60 Sekunden, insbesondere etwa 20 Sekunden, wird der Überzug getrocknet und durch das Zusammenfließen seiner thermoplastischen oder die Reaktion seiner wärmehärtbaren Polymere und gegebenenfalls auch schon durch Reaktion seiner anorganischen Bestandteile eingebrannt. Es wird ein festhaftender, glatter, elektrisch isolierender Film gebildet. Dieser ist absolut auch im Freien lagerfähig und wirkt zugleich als Korrosionsschutz für die damit überzogenen Eisengegenstände.

Beim Glühen des Blechmaterials auf 700 bis 850 °C verlieren diese Überzüge zwar ihre organischen Bestandteile, jedoch nicht ihre Isolierfähigkeit. Damit überzogene Bleche, z. B. aus Elektrostahl, können nach dem Stanzen gut zu Paketen überschweißt werden. Die thermische Stabilität der aus den genannten Mischungen erzeugten Überzüge aus Stahl ist so hoch, daß flüssiger Stahl sie bei Temperaturen bis zu 1.370 °C nicht zerstört.

In Dicken von 0,1 bis 1 mm können die aus dem erfindungsgemäßen Mittel hergestellten Schichten zur Isolierung von Kokillen beim Stahl- oder Formguß dienen und ersetzen vorteilhaft bisher übliche Kokillenlacke. Gleichermaßen findet die erfindungsgemäße Zusammensetzung auch gute Anwendung in bezug auf Druckguß (z. B. mit Aluminium oder Kupfer).

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der folgenden Ausführungsbeispiele veranschaulicht, welche die vorliegende Erfindung jedoch keinesfalls beschränken.

### Ausführungsbeispiele:

### Beispiel 1 (erfindungsgemäßes Beispiel):

Eine erfindungsgemäße Zusammensetzung mit den folgenden Bestandteilen wird hergestellt:
- 45,00 Gew.-Teile einer 50%igen wäßrigen Lösung eines Aluminiumhydrogenphosphats mit einem P₂O₅ / Al₂O₃-Molverhältnis > 4, entsprechend einem Feststoffanteil von 22,50 Gew.-Teilen Aluminiumhydrogenphosphat
- 32,50 Gew.-Teile einer 40%igen Lösung eines unter Erwärmung filmbildenden organischen Polymers (Luhydran® S937 T von der BASF AG, Deutschland), entsprechend einem Feststoffanteil an Polymer von 14,625 Gew.-Teilen
- 1,00 Gew.-Teile Zinkoxid
- 2,00 Gew.-Teile Aluminiumoxidhydrat (Alfrimal® 437)
- 1,5 Gew.-Teile Lithiumhydroxid
- 0,25 Gew.-Teile Korrosionsschutzmittel (Natriumdimolybdat)
- 2,25 Gew.-Teile Muskovitglimmer (Kieselsäure)
- 0,045 Gew.-Teile Verdicker (Kelzan® D)
- 0,10 Gew.-Teile Tensid (Plurafac® 711)
- 5,00 Gew.-Teile Lösungsvermittler Wasser/Polymer (1,4-Butandiol)
- 12,75 Gew.-Teile Wasser (destilliert).

### Beispiel 2 (Vergleichsbeispiel, nicht erfindungsgemäß):

Zum Vergleich wird die gleiche Zusammensetzung wie in Beispiel 1 hergestellt, jedoch mit dem Unterschied, daß anstelle des Aluminiumhydrogenphosphats mit einem P₂O₅ / Al₂O₃-Molverhältnis > 4 ein Aluminiumhydrogenphosphat mit einem P₂O₅ / Al₂O₃-Molverhältnis von 3,7 eingesetzt wird.

### Beispiel 3: Korrosionsverhalten (Vergleicherfindungsgemäßer und nicht erfindungsgemäßer Zusammensetzungen)

Jeweils drei Elektrostahlbleche von 10 cm x 10 cm und 10 mm Dicke werden mit der Zusammensetzung nach Beispiel 1 (erfindungsgemäß) bzw. nach Beispiel 2 (Vergleich) besprüht und bei Temperaturen von 250 bis 300 °C behandelt, so daß schließlich Elektrostahlbleche resultierten, die mit einem 10 µm dicken Schutzfilm auf Basis der Zusammensetzung nach Beispiel 1 (erfindungsgemäß) bzw. Beispiel 2 (Vergleich) überzogen sind.
Die auf diese Weise mit einer Schutzschicht versehenen Elektrostahlbleche werden anschließend in bezug auf ihre Korrosionsstandzeit getestet. Zu diesem Zweck werden sie dem Salzsprühnebeltest nach DIN 50021 unterzogen.
Alle Bleche zeigen gute Korrosionsstandzeiten. Nach 60 Stunden zeigt keines der Bleche Korrosionserscheinungen.
Nach 100 Stunden zeigen die mit der Vergleichszusammensetzung nach Beispiel 2 behandelten Elektrostahlbleche erste Korrosionserscheinungen, während die mit der erfindungsgemäßen Zusammensetzung behandelten Elektrobleche auch nach 200 Stunden noch keinerlei Korrosionsanzeichen zeigen. Zu diesem Zeitpunkt zeigen die mit der Vergleichszusammensetzung nach Beispiel 2 behandelten Elektrobleche aber bereits deutliche Korrosionsanzeichen und ein fleckiges Aussehen.
Das vorliegende Beispiel belegt die verbesserte Schutzwirkung der ausgehend von den Zusammensetzungen des Beispiels 1 erzeugten Schutzschichten bzw. Schutzfilme aufgrund des Vorhandenseins eines Aluminiumhydrogenphosphats mit einem P₂O₅ / Al₂O₃-Molverhältnis > 4.

### Beispiel 4: Lagerstabilität (Vergleicherfindungsgemäßer und nicht erfindungsgemäßer Zusammensetzungen)

Die Zusammensetzung nach Beispiel 1 (erfindungsgemäß) und nach Beispiel 2 (Vergleich) werden einem Lagerstabilitätstest (Alterungstest) unterzogen. Zu diesem Zweck werden jeweils 1 kg der Zusammensetzungen in einem geschlossenen Behältnis drei Monate lang bei 30 °C aufbewahrt. Nach Ablauf dieses Zeitraums werden die beiden Zusammensetzungen visuell und analytisch untersucht: Während die erfindungsgemäße Zusammensetzung nach Beispiel 1 keinerlei Alterungserscheinungen aufweist, insbesondere als nach wie vor homogene Zusammensetzung ohne Verklumpungen und Ausfällungen vorliegt, ist die Vergleichszusammensetzung nach Beispiel 2 bereits deutlich enthomogenisiert und weist erhebliche Ausfällungen (Bodensatz) auf. Dieser Versuch dokumentiert die verbesserte Lagerstabilität der erfindungsgemäßen Zusammensetzung aufgrund der Verwendung des Aluminiumhydrogenphosphats mit einem P₂O₅ / Al₂O₃-Molverhältnis > 4.

### Beispiel 5: Korrosions- und Elastizitätsverhalten (Vergleich erfindungsgemäßer und nicht erfindungsgemäßer Zusammensetzungen)

Es wird die gleiche Zusammensetzung wie in Beispiel 1 hergestellt, jedoch mit dem einzigen Unterschied, daß in der erfindungsgemäßen Zusammensetzung gemäß Beispiel 5 kein Lithiumhydroxid vorhanden ist.
Jeweils drei Elektrostahlbleche von 10 cm x 10 cm und 10 mm Dicke werden mit der Zusammensetzung nach Beispiel 1 (erfindungsgemäß, mit Lithiumhydroxid) bzw. nach Beispiel 5 (gleichermaßen erfindungsgemäß, aber ohne Lithiumhydroxid) besprüht und bei Temperaturen von 250 bis 300 °C behandelt, so daß schließlich Elektrostahlbleche resultierten, die mit einem 10 µm dicken Schutzfilm auf Basis der Zusammensetzung nach Beispiel 1 bzw. Beispiel 5 überzogen waren.
Jeweils zwei der auf diese Weise mit einer Schutzschicht versehenen Elektrostahlbleche werden anschließend in bezug auf ihre Korrosionsstandzeit getestet. Zu diesem Zweck werden sie entsprechend Beispiel 3 dem Salzsprühnebeltest nach DIN 50021 unterzogen. Alle Bleche zeigen gute Korrosionsstandzeiten. Auch nach 200 Stunden zeigt keines der Bleche Korrosionserscheinungen. Erst nach 300 Stunden zeigen die mit der Zusammensetzung nach Beispiel 5 behandelten Elektrostahlbleche erste Korrosionserscheinungen in Form winziger Korrosionspunkte, während die mit der Zusammensetzung nach Beispiel 1 behandelten Elektrobleche auch nach 300 Stunden noch keinerlei Korrosionsanzeichen zeigen. Dies zeigt, daß sich durch die Zugabe geringer Mengen an Alkali- bzw. Erdalkalimetallhydroxiden (hier: Lithiumhydroxid) die Korrosionsstandzeiten noch weiter steigern lassen.
Des weiteren wird zur Überprüfung des Elastizitätsverhaltens der Schutzschichten jeweils ein auf die vorgenannte Weise mit einer Schutzschicht versehenes Elektrostahlblech zerschnitten. Während das mit der Zusammensetzung nach Beispiel 1 behandelte Blech an der Schnittstelle nach wie vor eine einwandfreie Oberfläche aufweist, ist an der Schnittstelle des mit der Zusammensetzung nach Beispiel 5 behandelten Blechs eine geringfügige Rißbildung in der Schutzschicht ("Cracking") zu beobachten. Dies dokumentiert, daß sich durch die Zugabe geringer Mengen an Alkali- bzw. Erdalkalimetallhydroxiden (hier: Lithiumhydroxid) das Elastizitätsverhalten der Schutzschichten bzw. Schutzfilme positiv beeinflussen läßt und somit weniger spröde Schutzschichten mit glatteren, besser zu bearbeitenden Oberfläche resultieren, die weniger zur Rißbildung tendieren.

## Patentansprüche

1. Zusammensetzung, insbesondere zur Erzeugung von Schutzschichten auf Metalloberflächen, wie Gegenständen aus Eisen oder Eisenlegierungen, in Form einer wäßrigen phosphathaltigen Lösung oder Dispersion, enthaltend
(a) mindestens ein Aluminiumhydrogenphosphat mit einem P₂O₅ / Al₂O₃ - Molverhältnis > 4;
(b) mindestens ein unter Erwärmung filmbildendes organisches Polymer; und
(c) Lithiumhydroxid.

2. Zusammensetzung nach Anspruch 1, **dadurch gekennzeichnet, daß** das Aluminiumhydrogenphosphat ein P₂O₅ / Al₂O₃ - Molverhältnis > 4,2 und insbesondere > 4,5 aufweist.

3. Zusammensetzung nach Anspruch 1 und/oder 2, **dadurch gekennzeichnet, daß** die Zusammensetzung Aluminiumhydrogenphosphat(e) in Mengen von 5 bis 60 Gew.-%, insbesondere 10 bis 50 Gew.-%, bezogen auf die Zusammensetzung, enthält.

4. Zusammensetzung nach einem oder mehreren der vorangehenden Ansprüche, **dadurch gekennzeichnet, daß** die Zusammensetzung Polymer(e) in Mengen von 5 bis 40 Gew.-%, insbesondere 5 bis 30 Gew.-%, vorzugsweise 5 bis 25 Gew.-%, bezogen auf die Zusammensetzung, enthält.

5. Zusammensetzung nach einem oder mehreren der vorangehenden Ansprüche, **dadurch gekennzeichnet, daß** das unter Erwärmung filmbildende organische Polymer ausgewählt ist aus der Gruppe von Acrylharzen; Epoxidharzen; und synthetischen Wachsen, insbesondere auf Basis von gegebenenfalls fluorierten Polyolefinen, und/oder daß das organische Polymer bei Temperaturen oberhalb von 250 °C filmbildend ist.

6. Zusammensetzung nach einem oder mehreren der vorangehenden Ansprüche, **dadurch gekennzeichnet, daß** die Zusammensetzung sauer eingestellt ist und vorzugsweise einen pH-Wert < 3, insbesondere ≤ 2,5, aufweist.

7. Zusammensetzung nach einem oder mehreren der vorangehenden Ansprüche, **dadurch gekennzeichnet, daß** die Zusammensetzung außerdem weitere Inhaltsstoffe, Zusatzmittel und/oder Hilfsstoffe enthält.

8. Zusammensetzung nach einem oder mehreren der vorangehenden Ansprüche, **dadurch gekennzeichnet, daß** die Zusammensetzung mindestens ein weiteres Metallhydroxid, -oxid und/oder -oxidhydrat enthält, insbesondere ausgewählt aus der Gruppe von Erdalkalimetalloxid(en), insbesondere Magnesiumoxid; Zinkoxid(en); Aluminiumoxidhydrat(en); und Alkali- oder Erdalkalimetallhydroxid(en).

9. Zusammensetzung nach einem oder mehreren der vorangehenden Ansprüche, **dadurch gekennzeichnet, daß** die Zusammensetzung Zinkoxid(e) und/oder Magnesiumoxid(e), insbesondere Zinkoxid(e), enthält, insbesondere in Mengen von 0,1 bis 5 Gew.-%, vorzugsweise 0,5 bis 2 Gew.-%, bezogen auf die Zusammensetzung.

10. Zusammensetzung nach einem oder mehreren der vorangehenden Ansprüche, **dadurch gekennzeichnet, daß** die Zusammensetzung Aluminiumoxidhydrat(e) enthält, insbesondere in Mengen von 0,1 bis 10 Gew.-%, vorzugsweise 0,1 bis 5 Gew.-%, bezogen auf die Zusammensetzung.

11. Zusammensetzung nach einem oder mehreren der vorangehenden Ansprüche, **dadurch gekennzeichnet, daß** die Zusammensetzung Lithiumhydroxid in Mengen von 0,1 bis 2 Gew.-%, vorzugsweise 0,5 bis 1 Gew.-%, enthält, bezogen auf die Zusammensetzung.

12. Zusammensetzung nach einem oder mehreren der vorangehenden Ansprüche, **dadurch gekennzeichnet, daß** die Zusammensetzung mindestens ein Korrosionsschutzmittel, insbesondere auf Molybdatbasis, enthält, insbesondere in Mengen von 0,1 bis 2 Gew.-%, vorzugsweise 0,1 bis 1 Gew.-%, bezogen auf die Zusammensetzung.

13. Zusammensetzung nach einem oder mehreren der vorangehenden Ansprüche, **dadurch gekennzeichnet, daß** sie enthält:
- 5 bis 60 Gew.-%, insbesondere 10 bis 50 Gew.-%, mindestens eines Aluminiumhydrogenphosphats mit einem P₂O₅ / Al₂O₃ - Molverhältnis > 4,
- 5 bis 40 Gew.-%, insbesondere 5 bis 30 Gew.-%, vorzugsweise 5 bis 25 Gew.-%, mindestens eines unter Erwärmung filmbildenden organischen Polymers,
- 0,1 bis 2 Gew.-%, insbesondere 0,5 bis 1 Gew.-%, Lithiumhydroxid,
- gegebenenfalls 0,1 bis 5 Gew.-%, insbesondere 0,5 bis 2 Gew.-%, Zinkoxid(e) und/oder Magnesiumoxid(e),
- gegebenenfalls 0,1 bis 10 Gew.-%, insbesondere 0,1 bis 5 Gew.-%, Aluminiumoxidhydrat(e),
- gegebenenfalls 0,1 bis 20 Gew.-%, insbesondere 0,1 bis 5 Gew.-%, mindestens eines Silikats und/oder mindestens einer Kieselsäure,
- gegebenenfalls 0,1 bis 2 Gew.-%, insbesondere 0,1 bis 1 Gew.-%, mindestens eines Korrosionsschutzmittels, insbesondere auf Molybdatbasis,
- gegebenenfalls 0,01 bis 2,5 Gew.-%, insbesondere 0,1 bis 2 Gew.-%, mindestens eines Tensids, insbesondere eines nichtionischen Tensids,
- gegebenenfalls mindestens 0,1 bis 10 Gew.-%, insbesondere 1 bis 6 Gew.-%, mindestens eines Lösungsvermittlers und/oder Dispergiermittels,
- gegebenenfalls 0,01 bis 2 Gew.-%, insbesondere 0,01 bis 0,5 Gew.-%, mindestens eines Verdickungsmittels
wobei alle vorgenannten Mengenangaben auf die Zusammensetzung bezogen sind.

14. Verfahren zur Erzeugung von Schutzschichten auf Metalloberflächen, insbesondere auf Gegenständen aus Eisen oder Eisenlegierungen, wie Stahl, **dadurch gekennzeichnet, daß** man die Zusammensetzung nach einem oder mehreren der Ansprüche 1 bis 13 auf die Metalloberfläche aufträgt und anschließend erhitzt.

15. Verwendung der Zusammensetzung nach einem oder mehreren der Ansprüche 1 bis 13 zur Erzeugung von Schutzschichten auf Metalloberflächen, insbesondere Gegenständen aus Eisen oder Eisenlegierungen, wie Stahl, oder zur Erzeugung von Isolierschichten von Kokillen für den Stahl- oder Formguß.

## Claims

1. A composition, in particular for producing protective coatings on metal surfaces, such as objects of iron or iron alloys, in the form of an aqueous phosphate-containing solution or dispersion comprising
(a) at least one aluminum hydrogen phosphate with a P₂O₅ / Al₂O₃ molar ratio of> 4;
(b) at least one organic polymer forming a film when heated; and
(c) lithium hydroxide.

2. A composition according to claim 1, **characterized in that** the aluminum hydrogen phosphate has a P₂O₅ / Al₂O₃ molar ratio of> 4.2 and in particular of> 4.5.

3. A composition according to claim 1 and/or claim 2, **characterized in that** the composition comprises aluminum hydrogen phosphate(s) in quantities of 5 to 60% by weight, in particular 10 to 50% by weight, based on the composition.

4. A composition according to one or more of the preceding claims**, characterized in that** the composition comprises polymer(s) in quantities of 5 to 40% by weight, in particular 5 to 30% by weight, preferably 5 to 25% by weight, based on the composition.

5. A composition according to one or more of the preceding claims, **characterized in that** the organic polymer, which forms a film when heated, is selected from the group of acrylic resins; epoxy resins; and synthetic waxes, in particular based on optionally fluorinated polyolefins, and/or the organic polymer forms a film at temperatures above 250 °C.

6. A composition according to one or more of the preceding claims, **characterized in that** the composition is acidified and preferably has a pH of < 3, in particular ≤ 2.5.

7. A composition according to one or more of the preceding claims, **characterized in that** the composition additionally comprises further ingredients, additives and/or auxiliary agents.

8. A composition according to one or more of the preceding claims, **characterized in that** the composition comprises at least one further metal hydroxide, metal oxide and/or metal oxide hydrate, in particular selected from the group of alkaline earth metal oxide(s), in particular magnesium oxide; zinc oxide(s); aluminum oxide hydrate(s); and alkali or alkaline earth metal hydroxide(s).

9. A composition according to one or more of the preceding claims, **characterized in that** the composition comprises zinc oxide(s) and/or magnesium oxide(s), in particular zinc oxide(s), in particular in quantities of 0.1 to 5% by weight, preferably 0.5 to 2% by weight, based on the composition.

10. A composition according to one or more of the preceding claims, **characterized in that** the composition comprises aluminum oxide hydrate(s), in particular in quantities of 0.1 to 10% by weight, preferably 0.1 to 5% by weight, based on the composition.

11. A composition according to one or more of the preceding claims, **characterized in that** the composition comprises lithium hydroxide in quantities of 0.1 to 2% by weight, preferably 0.5 to 1% by weight, based on the composition.

12. A composition according to one or more of the preceding claims, **characterized in that** the composition comprises at least one anti-corrosion agent, in particular based on molybdate, in particular in quantities of 0.1 to 2% by weight, preferably 0.1 to 1% by weight, based on the composition.

13. A composition according to one or more of the preceding claims, **characterized in that** said composition comprises:
- 5 to 60% by weight, in particular 10 to 50% by weight, of at least one aluminum hydrogen phosphate with a P₂O₅ / Al₂O₃ molar ratio of > 4;
- 5 to 40% by weight, in particular 5 to 30% by weight, preferably 5 to 25% by weight, of at least one organic polymer forming a film when heated;
- 0.1 to 2% by weight, in particular 0.5 to 1% by weight, of lithium hydroxide;
- optionally 0.1 to 5% by weight, in particular 0.5 to 2% by weight, of zinc oxide(s) and/or magnesium oxide(s);
- optionally 0.1 to 10% by weight, in particular 0.1 to 5% by weight, of aluminum oxide hydrate(s);
- optionally 0.1 to 20% by weight, in particular 0.1 to 5% by weight, of at least one silicate and/or at least one silicic acid;
- optionally 0.1 to 2% by weight, in particular 0.1 to 1% by weight, of at least one anti-corrosion agent, in particular based on molybdate;
- optionally 0.01 to 2.5% by weight, in particular 0.1 to 2% by weight, of at least one surfactant, in particular of a non-ionic surfactant;
- optionally 0.1 to 10% by weight, in particular 1 to 6% by weight, of at least one solubilizer and/or dispersing agent;
- optionally 0.01 to 2% by weight, in particular 0.01 to 0.5% by weight, of at least one thickening agent,
all quantities given above being based on the composition.

14. A method for producing protective coatings on metal surfaces, in particular on objects of iron or iron alloys, such as steel, **characterized in that** the composition according to one or more of claims 1 to 13 is applied to the metal surface and subsequently heated.

15. The use of the composition according to one or more of claims 1 to 13 for producing protective coatings on metal surfaces, in particular objects of iron or iron alloy, such as steel, or for producing insulating layers of ingot molds for steel or mold casting.

## Revendications

1. Composition, notamment destinée à la réalisation de couches protectrices sur des surfaces métalliques telles que les objets en fer ou en alliages de fer, sous forme d'une solution ou dispersion aqueuse au phosphate, contenant
(a) au moins un hydrogénophosphate d'aluminium présentant un rapport molaire P₂O₅ / Al₂O₃ > 4;
(b) au moins un polymère organique formant un film sous l'effet de la chaleur; et
(c) de l'hydroxyde de lithium.

2. Composition selon la revendication 1, **caractérisée en ce que** ledit hydrogénophosphate d'aluminium présente un rapport molaire P₂O₅ / Al₂O₃ > 4,2 et notamment > 4,5.

3. Composition selon les revendications 1 et/ou 2, **caractérisée en ce que** ladite composition contient du/des hydrogénophosphate(s) d'aluminium dans une quantité comprise entre 5 et 60 % en poids, notamment entre 10 et 50 % en poids, par rapport à la composition.

4. Composition selon une ou plusieurs des revendications précédentes, **caractérisée en ce que** ladite composition contient du/des polymère(s) dans une quantité comprise entre 5 et 40 % en poids, notamment entre 5 et 30 % en poids, de préférence entre 5 et 25 % en poids.

5. Composition selon une ou plusieurs des revendications précédentes, **caractérisée en ce que** ledit polymère organiques formant en film sous l'effet de la chaleur est choisi dans le groupe des résines acryliques; des résines époxydes; et des cires synthétiques, notamment à base de polyoléfines le cas échéant fluorées, et/ou que ledit polymère organiques forme un film à des températures en-dessus de 250 °C.

6. Composition selon une ou plusieurs des revendications précédentes, **caractérisée en ce que** ladite composition est de caractère acide et présente préférentiellement un pH < 3, notamment ≤ 2,5.

7. Composition selon une ou plusieurs des revendications précédentes, **caractérisée en ce que** ladite composition contient en outre d'autres composants, suppléments et/ou agents auxiliaires.

8. Composition selon une ou plusieurs des revendications précédentes, **caractérisée en ce que** ladite composition contient au moins un autre hydroxyde, oxyde et/ou oxyde hydraté d'un métal, notamment choisi dans le groupe des oxydes de métaux alcalino-terreux, s'agissant notamment d'oxyde de magnésium; des oxydes de zinc; des oxydes hydratés d'aluminium; et des hydroxydes de métaux alcalins ou alcalino-terreux.

9. Composition selon une ou plusieurs des revendications précédentes, **caractérisée en ce que** ladite composition contient des oxydes de zinc et/ou des oxydes de magnésium, plus particulièrement des oxydes de zinc, notamment dans une quantité comprise entre 0,1 et 5 % en poids, de préférence entre 0,5 et 2 % en poids, par rapport à la composition.

10. Composition selon une ou plusieurs des revendications précédentes, **caractérisée en ce que** ladite composition contient des oxydes hydratés d'aluminium notamment dans une quantité comprise entre 0,1 et 10 % en poids, de préférence entre 0,1 et 5 % en poids, par rapport à la composition.

11. Composition selon une ou plusieurs des revendications précédentes, **caractérisée en ce que** ladite composition contient de l'hydroxyde de lithium dans une quantité comprise entre 0,1 et 2 % en poids, de préférence entre 0,5 et 1 % en poids, par rapport à la composition.

12. Composition selon une ou plusieurs des revendications précédentes, **caractérisée en ce que** ladite composition contient un agent anticorrosion, plus particulièrement à base de molybdate, notamment dans une quantité comprise entre 0,1 et 2 % en poids, de préférence entre 0,1 et 1 % en poids, par rapport à la composition.

13. Composition selon une ou plusieurs des revendications précédentes, **caractérisée en ce qu'**elle contient:
- 5 à 60 % en poids, notamment 10 à 50 % en poids, d'au moins un hydrogénophosphate d'aluminium présentant un rapport molaire P₂O₅ / Al₂O₃ > 4,
- 5 à 40 % en poids, notamment 5 à 30 % en poids, de préférence 5 à 25 % en poids, d'au moins un polymère organiques formant un film sous l'effet de la chaleur,
- 0,1 à 2 % en poids, notamment 0,5 à 1 % en poids, d'hydroxyde de lithium,
- le cas échéant, 0,1 à 5 % en poids, notamment 0,5 à 2 % en poids, d'oxydes de zinc et/ou d'oxydes de magnésium,
- le cas échéant, 0,1 à 10 % en poids, notamment 0,1 à 5 % en poids, d'oxydes hydratés d'aluminium,
- le cas échéant, 0,1 à 20 % en poids, notamment 0,1 à 5 % en poids, d'au moins un silicate et/ou d'au moins un acide silicique,
- le cas échéant, 0,1 à 2 % en poids, notamment 0,1 à 1 % en poids, d'au moins un agent anticorrosion, plus particulièrement à base de molybdate,
- le cas échéant, 0,01 à 2,5 % en poids, notamment 0,1 à 2 % en poids, d'au moins un agent tensioactif, plus particulièrement d'un agent tensioactif non-ionique.
- le cas échéant, au moins 0,1 à 10 % en poids, notamment 1 à 6 % en poids, d'au moins un agent de solubilisation et/ou agent de dispersion,
- le cas échéant, 0,01 à 2 % en poids, notamment 0,01 à 0,5 % en poids, d'au moins un agent épaississant
l'ensemble des indications quantitatives précédentes étant exprimé par rapport à la composition.

14. Procédé de réalisation de couches protectrices sur des surfaces métalliques, plus particulièrement sur des objets en fer ou en alliages de fer tels que l'acier, **caractérisé en ce que** ladite composition selon une ou plusieurs des revendications 1 à 13 est appliquée sur la surface métallique puis chauffée.

15. Utilisation de la composition selon une ou plusieurs des revendications 1 à 13 pour réaliser des couches protectrices sur des surfaces métalliques, s'agissant plus particulièrement d'objets en fer ou en alliages de fer tels que l'acier, ou pour réaliser des couches isolantes de coquilles destinées à la coulée d'acier ou au moulage de matières en fusion.
